Europäisches Patentamt

European Patent Office

Office européen des brevets

(19)

(11) Veröffentlichungsnummer: **0 384 160**

**A2**

(12) **EUROPÄISCHE PATENTANMELDUNG**

(21) Anmeldenummer: 90101666.7

(22) Anmeldetag: 27.01.90

(51) Int. Cl.5: **G01B 7/28**

(30) Priorität: 24.02.89 DE 3905742

(43) Veröffentlichungstag der Anmeldung:
29.08.90 Patentblatt 90/35

(84) Benannte Vertragsstaaten:
**DE ES FR GB IT SE**

(71) Anmelder: **ROBERT BOSCH GMBH**
**Postfach 10 60 50**
**D-7000 Stuttgart 10(DE)**

(72) Erfinder: **Dobler, Klaus, Dr. Dipl.-Ing.**
**Bettäckerstrasse 12**
**D-7016 Gerlingen(DE)**
Erfinder: **Hachtel, Hansjörg, Dipl.-Ing.**
**Buchenstrasse 4**
**D-7251 Weissach(DE)**

(54) **Messeinrichtung zur berührungsfreien Erfassung der Gestalt von Bauteilen.**

(57) Bei einer Meßeinrichtung zur berührungsfreien Bestimmung der Gestalt einer Schraube (12) sind an der Laufschiene (10) eines Förderers (11) Spulen (14, 15) angeordnet. Bei beschichteten Schrauben (12) kann mit Hilfe einer niedrigen Trägerfrequenz ($f_T$) des die Spulen (14, 15) durchfließenden Wechselstroms die Kontur des Trägerkörpers (20) der Schicht (22) bestimmt werden. Wird hingegen die Trägerfrequenz ($f_T$) möglichst hoch gewählt, so kann die Kontur der Schicht (22) überprüft werden, ohne daß das Meßsignal durch die Form des Trägerkerns (20) verfälscht wird. Die Meßeinrichtung ermöglicht eine fehlerfreie, kontinuierliche Überwachung und Aussortierung von beschichteten Schrauben (12).

FIG.1

## Meßeinrichtung zur berührungsfreien Erfassung der Gestalt von Bauteilen

Stand der Technik

Die Erfindung geht aus von einer Meßeinrichtung zur berührungsfreien Erfassung der Gestalt von metallischen, schraubenförmigen Bauteilen nach der Gattung des Hauptanspruchs. Es ist bereits eine derartige Meßeinrichtung bekannt, bei der die Gestalt von Schrauben mit Hilfe von mit hochfrequentem Wechselstrom durchflossenen Spulen bestimmt wird. Das Meßprinzip beruht auf der Änderung der Impedanz der Spulen, wenn sich die Form der Bauteile ändert. Dabei können aber nur unbeschichtete Schrauben überprüft werden. Bei beschichteten Schrauben ergeben sich durch die Beschichtung bei den normal üblichen Trägerfrequenzen Meßfehler, so daß auch einwandfreie Schrauben als fehlerhaft aussortiert werden.

Vorteile der Erfindung

Die erfindungsgemäße Einrichtung mit den kennzeichnenden Merkmalen des Hauptanspruchs hat demgegenüber den Vorteil, daß die Gestalt von beschichteten Schrauben fehlerfrei ermittelt werden kann. Auch Schrauben mit unterschiedlicher Schichtdicke können überprüft werden. Durch Kombination von Spulen mit niedriger Trägerfrequenz und Spulen mit hoher Trägerfrequenz können sowohl die äußere Kontur der Schraube als auch die Kontur des Schraubenkerns selbst überprüft werden.

Durch die in den Unteransprüchen aufgeführten Maßnahmen sind vorteilhafte Weiterbildungen und Verbesserungen der im Hauptanspruch angegebenen Meßeinrichtung möglich.

Zeichnung

Ein Ausführungsbeispiel der Erfindung ist in der Zeichnung dargestellt und in der nachfolgenden Beschreibung näher erläutert. Es zeigen die Figuren 1 und 2 Schnittbilder einer Laufschiene eines Förderers und Figur 3 einen Schnitt durch eine beschichtete Schraube zur Erläuterung des Meßprinzips.

Beschreibung des Ausführungsbeispiels

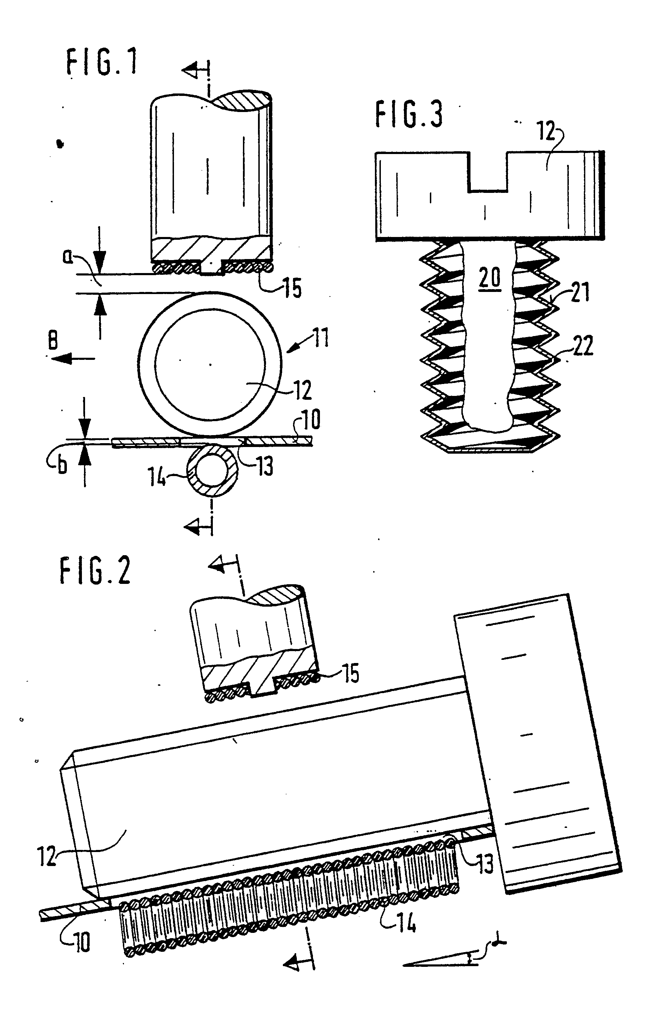

In den Figuren 1 und 2 ist mit 10 eine Laufschiene eines Förderers 11 bezeichnet, an der eine zu bestimmende Schraube 12 entlang gleitet oder rollt. Die Laufschiene 10 kann aus jedem Material hergestellt sein. Besteht sie aus metallischem Werkstoff, so ist ein Fenster 13 zweckmäßig. Im Bereich dieses Fensters 13 ist eine Spule 14 angeordnet. Auf der gegenüberliegenden Seite ist eine zweite Spule 15 vorgesehen. Die Spule 14 ist als Zylinderspule und die Spule 15 als Flachspule ausgebildet. Es ist aber auch möglich, die Art der verwendeten Spulen beliebig auszutauschen, so daß auch zwei Flachspulen oder zwei Zylinderspulen möglich sind. Ferner können die die Schraube 12 überwachenden Spulen 14, 15 auch zeitlich versetzt voneinander angeordnet sein. Für eine rationelle Gestaltung einer Meßeinrichtung und der Durchführung des Meßvorgangs sollten die beiden Spulen 14, 15 aber diametral gegenüberliegend angeordnet sein.

Die Schraube 12 weist, wie in Figur 3 dargestellt, einen Kern 20 aus Eisen, z.B. aus Automatenstahl auf. Das Gewinde 21 des Kerns 20 ist von einer Zinkschicht 22 überzogen und so gegen Korrosion geschützt. Es sind aber auch noch andere Schutzschichten, z.B. eine über die Zn-Schicht gezogene Chromatschicht möglich. Im folgenden wird das Meßverfahren bei einer mit einer Zinkschicht überzogenen Schraube erläutert.

Bei Inbetriebnahme des Förderers 11 werden die Schrauben 12 nacheinander in Pfeilrichtung B zwischen den beiden Spulen 14, 15 hindurchgeführt. Werden dabei die Spulen 14, 15 von einem hochfrequenten Wechselstrom durchflossen, so entstehen dadurch an den Spulen 14, 15 magnetische Wechselfelder. Diese bewirken auf den metallischen Oberflächen der Gewindeschäfte der Schrauben 12 Wirbelströme. Betrachtet man isoliert nur die Zinkschicht 22, so bildet sich bei diesem diamagnetischen, nicht ferromagnetischen, aber elektrisch leitendem Material nur der Wirbelstromeffekt aus. Diese Zinkschicht schwankt bedingt durch das galvanische Aufbringverfahren ungefähr zwischen 2 $\mu$m bis 15 $\mu$m.

Hingegen wirkt bei einer isolierten Betrachtung des Kerns 20 aus ferromagnetischem Material sowohl der ferromagnetische Effekt als auch der Wirbelstromeffekt. Während der ferromagnetische Effekt, d.h. die Beeinflussung des elektromagnetischen Wechselfeldes der Spule durch die ferromagnetischen Eigenschaften des Materials, eine Erhöhung der Induktivität der Spule bewirkt, ruft der Wirbelstromeffekt eine Verminderung der Induktivität der Spule hervor. Diese beiden Meßeffekte wirken also gegensätzlich. Ferner nimmt mit steigender Frequenz $f_T$ ($f_T$ = Frequenz des Wechselstroms, der die Spule durchfließt) der Wirbelstromeffekt zu, während sich die Permeabilität verkleinert. Würden die Spulen 14, 15 isoliert nur dem ferromagnetischen Kern 20 gegenüberstehen, so würde sich die Meßspannung $U_M$ erhöhen, sofern der ferromagnetische Wert dominiert.

Ferner bestimmt aber auch die Größe der Trägerfrequenz $f_T$ die Eindringtiefe des elektromagnetischen Wechselfeldes in das zu messende Bauteil. Dies bedeutet, daß bei beschichteten Schrauben 12 abhängig von der Größe der Trägerfrequenz $f_T$ entweder die Schicht 22 oder der Kern 20 bestimmt werden kann. Bei herkömmlich verwendeten Trägerfrequenzen war deren Größe zwar auf eine gute Meßsignalgewinnung ausgerichtet, aber die Eindringtiefe des elektromagnetischen Wechselfeldes war so, daß es sowohl in der Schutzschicht als auch im Kern wirksam war, mit der Konsequenz, daß jede Änderung der Stärke der nicht ferromagnetischen Schicht 22 das Meßsignal beeinflußt und so Konturänderungen des Gewindes vortäuscht.

Erfindungsgemäß sollen die Spulen 14, 15 mit einer sehr hohen Trägerfrequenz $f_T$ von z.B. 12 MHz gespeist werden. Wie oben ausgeführt und ferner durch den Skineffekt bewirkt, bildet das erzeugte elektromagnetische Wechselfeld der Spulen 14, 15 nur auf der äußeren Zinkschicht Wirbelströme aus. Bei der Trägerfrequenz von 12 MHz ist der vom elektromagnetischen Wechselfeld im Kern bewirkte ferromagnetische Effekt so gering, daß er das Meßsignal nahezu nicht verfälscht. Besonders bei einer Zinkschichtdicke von > 2 μm, wie sie bei vielen Schrauben gegeben ist, erfaßt das Meßsignal dann nur den Konturverlauf der Zinkschicht 22.

Werden hingegen die Spulen mit einem Wechselstrom mit sehr tiefer Trägerfrequenz $f_T$ von z.B. 1,6 kHz gespeist, so durchdringt das von der Spule erzeugte magnetische Wechselfeld nahezu ungeschwächt die Zinkschicht 22. Es bilden sich in der Zinkschicht 22 selbst nur vernachlässigbar geringe Wirbelströme aus, so daß das Meßsignal nahezu völlig auf der Wechselwirkung des elektromagnetischen Feldes und des ferromagnetischen Kerns besteht. Unabhängig von der Zinkschichtdicke kann somit der Konturverlauf des Kerns 20 der Schraube 12 hinreichend genau bestimmt werden.

Ferner ist es möglich, in einer einzigen Meßeinrichtung sowohl die Kontur des Kerns 20 als auch die Kontur der Zinkschicht 22 einer Schraube 12, ohne daß sie durch Effekte gegenseitig verfälscht werden, zu bestimmen. Hierzu wird eine der Spulen mit einer sehr hohen Trägerfrequenz $f_T$ und die andere Spule mit einer sehr tiefen Trägerfrequenz $f_T$ gespeist. Der Meßvorgang kann dabei gleichzeitig ausgeführt werden, indem die beiden Spulen diametral gegenüberliegen oder auch indem die beiden Meßverfahren seitlich versetzt ausgeführt werden. Die Spulen sind dabei aber mit einem so großen Abstand anzuordnen, daß sich die Meßverfahren nicht gegenseitig beeinflussen. Bei jedem Meßverfahren wird das Meßsignal mit einem vorgegebenen Sollwert verglichen und davon abweichende Schrauben aussortiert.

## Ansprüche

1. Meßeinrichtung zur berührungsfreien Erfassung der Gestalt von Bauteilen (12), insbesondere schraubenförmigen Bauteilen, wobei die Meßeinrichtung mindestens aus einer von einem Wechselstrom durchflossenen Spule (14, 15) besteht und die Bauteile (12) mindestens teilweise aus ferromagnetischem Material bestehen, dadurch gekennzeichnet, daß die Bauteile (12) mindestens eine Schicht (22) aus nicht ferromagnetischem jedoch elektrisch leitendem Stoff aufweisen und die Trägerfrequenz ($f_T$) des die Spulen (14, 15) durchfließenden Wechselstroms so hoch ist, daß das von der Spule (14, 15) erzeugte elektromagnetische Wechselfeld nahezu nur in der Schicht (22) Wirbelströme ausbildet.

2. Meßeinrichtung zur berührungsfreien Erfassung der Gestalt von Bauteilen (12), insbesondere schraubenförmigen Bauteilen, wobei die Meßeinrichtung mindestens aus einer von einem Wechselstrom durchflossenen Spule (14, 15) besteht und die Bauteile (12) mindestens teilweise aus ferromagnetischem Material bestehen, dadurch gekennzeichnet, daß die Bauteile (12) mindestens eine Schicht (22) aus nicht ferromagnetischem jedoch elektrisch leitendem Stoff aufweisen und die Trägerfrequenz ($f_T$) des die Spulen (14, 15) durchfließenden Wechselstroms so niedrig ist, daß das von der Spule (14, 15) erzeugte elektromagnetische Wechselfeld nahezu ungeschwächt den die Schicht (22) tragenden Festkörper (20) des Bauteils (12) erreicht.

3. Meßeinrichtung nach Anspruch 1 oder 2, dadurch gekennzeichnet, daß die Meßeinrichtung in einer Fördervorrichtung (11) für das Bauteil (12) angeordnet ist, und daß die Bauteile (12) zwischen mindestens zwei gegenüberliegenden Spulen (14, 15) hindurch bewegt werden.

4. Meßeinrichtung zur berührungsfreien Erfassung der Gestalt von Bauteilen (12), insbesondere schraubenförmigen Bauteilen, wobei die Meßeinrichtung mindestens aus einer von einem Wechselstrom durchflossenen Spule (14, 15) besteht und die Bauteile (12) mindestens teilweise aus ferromagnetischem Material bestehen, dadurch gekennzeichnet, daß die Bauteile (12) mindestens eine Schicht (22) aus nicht ferromagnetischem jedoch elektrisch leitendem Stoff aufweisen, daß mindestens eine erste Spule (14) mit einem Wechselstrom durchflossen ist, dessen Trägerfrequenz ($f_T$) so hoch ist, daß das von der Spule (14) erzeugte elektromagnetische Wechselfeld nahezu nur in der Schicht (20) Wirbelströme ausbildet, daß mindestens eine zweite Spule (15) mit einem Wechselstrom durchflossen ist, dessen Trägerfrequenz ($f_T$) so niedrig ist, daß das von der Spule (15) erzeugte elektromagnetische Wechselfeld nahezu ungeschwächt den die Schicht (20) tragenden Festkörper (20) des Bauteils (12) erreicht, und daß die erste (14) und die zweite Spule (15) in einer elektronischen UND-Schaltung verschaltet sind.

5. Meßeinrichtung nach einem der Ansprüche 1, 3 oder 4, dadurch gekennzeichnet, daß die Trägerfrequenz ($f_T$) der ersten Spule (14) mindestens 10 MHz beträgt.

6. Meßeinrichtung nach einem der Ansprüche 2 bis 4, dadurch gekennzeichnet, daß die Trägerfrequenz ($f_T$) der zweiten Spule (15) höchstens 15 kHz beträgt.

7. Meßeinrichtung nach einem der Ansprüche 4 bis 6, dadurch gekennzeichnet, daß die erste (14) und die zweite Spule (15) das Bauteil (12) gleichzeitig abtasten.

8. Meßeinrichtung nach einem der Ansprüche 4 bis 6, dadurch gekennzeichnet, daß die erste (14) und die zweite Spule (15) das Bauteil (12) zeitlich nacheinander abtasten.

FIG.1

FIG.2

FIG.3